**Europäisches Patentamt**

(19) **European Patent Office**

**Office européen des brevets**

(11) Publication number : **0 366 789 B1**

(12) # EUROPEAN PATENT SPECIFICATION

(45) Date of publication of patent specification :
30.09.92 Bulletin 92/40

(51) Int. Cl.⁵ : **F16L 19/02, F16L 19/03**

(21) Application number : **88903962.4**

(22) Date of filing : **09.05.88**

(86) International application number :
**PCT/JP88/00451**

(87) International publication number :
**WO 89/11058 16.11.89 Gazette 89/27**

(54) **CONNECTION MECHANISM FOR THIN-WALLED STAINLESS STEEL PIPES AND JOINT.**

(43) Date of publication of application :
09.05.90 Bulletin 90/19

(45) Publication of the grant of the patent :
30.09.92 Bulletin 92/40

(84) Designated Contracting States :
**CH DE FR GB IT LI**

(56) References cited :
**DE-A- 2 018 547
JP-U-55 173 720
JP-U-59 107 390
US-A- 3 393 930**

(73) Proprietor : **O.N.INDUSTRIES CO. LTD.
466, Jingo, Tsuyama-shi
Okayama 708 (JP)**

(72) Inventor : **NAKAMURA, Yoshiro
O.N. Industries Co., Ltd. 466, Jingo
Tsuyama-shi Okayama 708 (JP)**

(74) Representative : **TER MEER - MÜLLER -
STEINMEISTER & PARTNER
Mauerkircherstrasse 45
W-8000 München 80 (DE)**

# Description

## Technical Field

This invention relates to a joint mechanism capable of connecting on site easily and firmly a pair of thin-wall stainless steel pipes for conducting a fluid.

## Technical Background

Thin-wall stainless steel pipes have been widely used inside or outside buildings for conducting a fluid such as water or steam. These thin-wall stainless steel pipes have found wide applications replacing iron and copper pipes which are liable to corrosion, causing leakage and vinyl pipes which have low resistance against heat and cold weather.

Because of the high price and large hardness, extendibility and malleability of stainless steel, the wall thickness of stainless steel pipes is set usually at approximately one millimeter. Consequently, it is difficult to thread the end portions of these thin-wall stainless steel pipes and join them with a nut. for this reason, soldering, welding, and pressing have been used for the connection.

However, these joints do not have satisfactory strength against pulling force, are not removable and liable to corrosion, and require a skilled hand for the connection. Thus, the inventor of this application has proposed a new joint mechanism in the Japanese Patent Application No. 59-107390). This joint mechanism includes a circular ridge with a pair of sloping surfaces on an end portion of a thin-wall stainless steel pipe and a joint having a diameter sufficiently large to receive the pipe. A male thread and a circular cutout are provided on the outside and the inside of an end of the joint, respectively. The joint is fitted over the pipe such that it abuts a sloping surface of the circular ridge via a packing which is set in the circular cutout. A nut having an inside edge tapered so as to abut the other sloping surface is threaded over the joint to connect the pipe to the joint.

However, it has been impossible to check by observation if the nut is completely tightened to the joint. As a result, feelings on the tightening torque, the number of turns of the nut, or the measurement of a distance between the joint and the nut has been used for the check. These operations, however, have proved too troublesome to be practical.

Accordingly, it is an object of the invention to provide a joint mechanism for thin-wall stainless steel pipes, which has higher resistance against pulling force than ever before, is easy to disconnect or removable, does not require a skilled hand, and enables one to check the tightening of a nut by observation.

## Disclosure of the Invention

According to the invention there is provided a joint mechanism which includes a joint mechanism for connecting a pair of thin-wall stainless steel pipes each having at an end an circular ridge with a pair of first and second sloping surfaces, which includes a joint member having a diameter sufficiently large to receive the pipes, a pair of first cutout portions with a packing groove therein at opposite ends, a central raised portion, and a pair of male thread portions on either side of the central raised portion; a pair of nuts each having a female thread portion for engaging with the male thread portion, a fitting portion for fitting over the pipe, a joint abutment surface against which a front face of the joint member abuts when the female thread portion engages with the male thread portion, and a second cutout portion for abutting the second sloping surface of the circular ridge; a pair of packings for abutting the first sloping surface of the circular ridge, the joint abutment surface of the nut, and the packing groove when the female thread portion engages with the male thread portion, and a pair of conical disc springs mounted on the joint member between the nut and the central raised portion, the outside surface of sound disc springs being provided with a color to distinguish it from the nut and central raised portion.

The thin-wall stainless steel pipes are connected by mounting the packings in the packing grooves, inserting the pipes into the joint, mounting the conical disc springs on the joint, and tightening the nuts. The packing is made so as to abut the first sloping surface, abutment surface, and packing groove so that any leakage of the fluid from the pipes is prevented. The circular ridge is held between the tapered section, second cutout, and packing so that falling off of the pipes from the joint is prevented. Even if the thin-wall stainless steel pipes expand or contract at high or low temperatures, the circular ridge is defined by the tapered section of the joint and second cutout of the nut so that it does not undergo any deformation, expansion, or contraction, thus increasing the life span of the packing. When the nut is threaded over the joint until the joint abutment abuts the front face of the joint, the conical disc spring is compressed between the nut and the central raised portion, making the colored outside of the disc spring invisible and thus the tightening check by observation possible. It is preferred that the side walls of the central raised portion are made upright with respect to the outside of the joint to make the check by observation easy. The conical disc spring may be mounted so that its outside faces either the central raised portion or the nut front end to produce the same results. When the nut is tightened, the front end of the joint abuts the joint abutment of the nut providing the thread portions with a large tensile force which increases the friction resistance between the male and female threads providing a large fastening force. In addition, the joint and nut slightly slide over the circular ridge so that the resiliency of the circular ridge is transmitted to the both nut and disc spring to add up to the resiliency of the packing and disc spring thus preventing the nuts from becoming loose due to the bending or vibration of the pipes.

That is, the joint mechanism according to the invention has improved pulling strength and durability, makes it easy to connect or disconnect thin-wall stainless steel pipes by merely tightening or loosing the nuts, thus eliminating the need for a skilled hand, and to find loose joint by observation.

## Brief Description of the Drawing

FIG. 1 a longitudinal section of a joint mechanism for connecting a pair of thin-wall stainless steel pipes according to an embodiment of the invention;

FIG. 2 is a cross-sectional view thereof, taken along the line II-II;

FIGS. 3 and 4 are enlarged sectional views thereof, showing the connection operation;

FIG. 5 is a longitudinal section of a circular ridge making tool with its pipe expanding rubber under the normal condition; and

FIG. 6 is a longitudinal section thereof, with the pipe expanding rubber compressed.

## Best Mode for Practicing the Invention

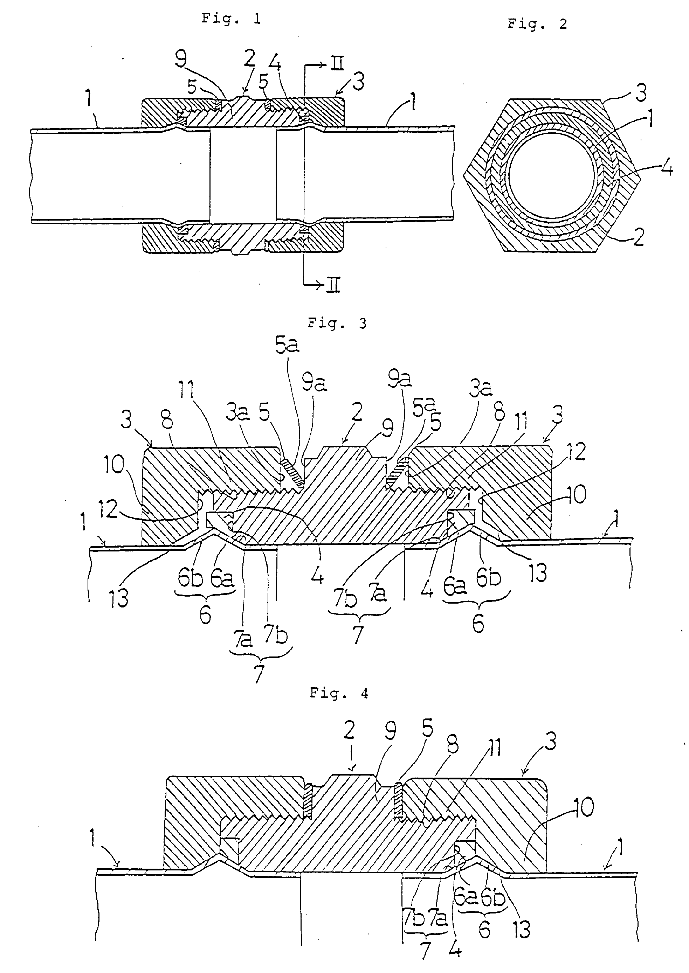

In FIGS. 1 through 4, a joint mechanism for connecting a pair of thin-wall stainless steel pipes 1 includes a joint 2, a pair of nuts 3, a pair of packings 4, and a pair of conical disc springs 5.

The pipe 1 has at an end a circular ridge 6 made by expanding the pipe in the form of a circular ridge having a pair of sloping surfaces 6a, 6b. The joint 2 has on its inside ends a pair of first cutouts 7 each consisting of a tapered portion 7a and a packing groove 7b and on its outside end portions a pair of male threads 8. Also, it has a central raised portion 9 with a pair of side walls 9a against which a face 3a of the nut 3 abuts via the conical disc spring 5. The nut 3 has a fitting portion 10 which fits over the pipe 1, a female thread portion 11 with a diameter greater than that of the fitting portion 10, a joint abutment 12 between the fitting portion 10 and the female thread portion 11, and a second annular cutout 13 on the edge of the joint abutment 12. The packing 4 is made of an elastic material, such as rubber, in the form of a ring with a generally rectangular cross-section, the respective surfaces of which abut the circular ridge 6, the packing groove 7, and the joint abutment of the nut 3 when it is set in the packing groove 7b and the pipes 1 are connected via the joint 2. The conical disc spring 5 is mounted between the end face 3a of the nut 3 and the side wall 9a of the central raised portion 9, and its outside 5a is provided with a certain color.

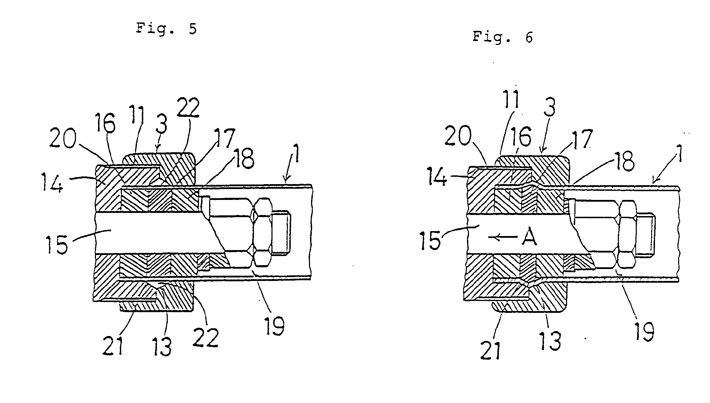

To assemble the joint mechanism, one or two nuts 3 are fitted over the pipe 1, and an end or both ends of the pipe 1 are expanded to form a circular ridge 6 at each end. It is preferred to make the angle of the sloping surface 6b of the circular ridge 6 agree with the angle of the second cutout 13 of the nut 3. To achieve this, it is preferred to use a pipe expanding device such as shown in Japanese Patent Application Publication No. 61-13890, which is illustrated in FIG5. 5 and 6.

In FIG5. 5 and 6, the pipe expanding device includes a pipe expanding head 14 which is secured to a platform (not shown), a shaft 15 which is slidable within the head 14, a rubber support 16 which is fitted over the shaft 15, a pipe expanding rubber 17, a rubber holder 18, and a pusher 19 secured to a free end of the shaft 15.

In operation, as shown in FIG. 5, the nut 3 with female thread 11 is threaded over the head 14 with male thread 20 while the shaft 15, rubber support 16, pipe expanding rubber 17, rubber holder 18, and pusher 19 are inserted into the pipe 1. As shown in FIG. 6, when the shaft 15 is pulled in the direction of an arrow A by a tool (not shown), the rubber support 16 abuts the head 14. When the shaft 15 is further pulled in the direction A, the pusher 19 pushes the rubber holder 18 in the direction A squeezing the pipe expanding rubber 17 between the rubber support 16 and the rubber holder 18 so that the pipe expanding rubber 17 expands outwardly in the radial direction by a volume equal to the volume reduced by compression between the rubber support 16 and the rubber holder 18. AS the pipe expanding rubber 17 expands, the thin-wall stainless steel pipe 1 is expanded into an annular space 20 with V-shaped cross section defined by the second cutout 13 of the nut 3 and the cutout 21 of the head 14 to form an circular ridge 6. Since the angle of the sloping surface 6b agrees with the angle of the second cutout 13, the axes of coupled pipes agree, making a close connection possible. In addition, the nut 3 serves as part of the pipe expanding tool, thus increasing the productivity of forming the circular ridge.

Then, the packing 4 is fitted in the packing groove 7b of the joint 2, and the pipe 1 is inserted into the joint 2 on which the conical disc spring 5 is mounted such that its outside 5a facing the side wall 9a of the central raised portion 9. When the nut 3 is threaded over the joint 2 until the abutment face 12 abuts the front end of the joint 2, the pipe 1 is fixedly held at the circular ridge 6 by the tapered portion 7a of the joint 2, the second cutout 13 of the nut 3, and the packing 4. The packing 4 abuts the sloping surface 6a, packing groove 7b, and joint abutment 12 to prevent the fluid from leaking from the pipe. When the nut 3 is threaded over the joint 2 until the joint abutment 12 abuts the front end of the joint 2, the conical disc spring 5 is completely compressed between the nut face 3a and the side wall 9a so that the colored surface 5a is no longer visible, indicating the complete tightening.

**Industrial Applicability**

The joint mechanism according to the invention is useful for connecting pipes for conducting city water, hot water, steam, pressurized steam, powder, or granules, and especially useful as a removable joint for connecting pipes which allows no leakage and requires a long service life.

**Claims**

1. A joint mechanism for connecting a pair of thin-wall stainless steel pipes (1) each having at an end a circular ridge (6) with first and second sloping surfaces (6a, 6b), which comprises:

   a joint member (2) having a diameter sufficiently large to receive said pipes (1) at opposite ends, a pair of first cutout portions (7) at the ends each with a packing groove (7b) therein, a central raised portion (9), and a pair of male thread portions (8) on either side of said central raised portion;

   a pair of nuts (3) each having a female thread portion (11) for engaging with said male thread portion (8), a fitting portion (10) for fitting over said pipe, a joint abutment surface (12) against which a front face of said joint member abuts when said female thread portion engages with said male thread portion, and a second cutout portion (13) for abutting said second sloping surface (6b) of said circular ridge;

   a pair of packings (4) for abutting said first sloping surface (6a) of said circular ridge, the joint abutment surface of said nut, and said packing groove when said female thread portion (11) engages with said male thread portion (8); and

   a pair of conical disc springs (5) each mounted on said joint member (2) between said nut (3) and said central raised portion (9), the outside surface of said disc springs (5) being provided with a colour to distinguish it from the nut and central raised portion.

2. The joint mechanism of claim 1, **characterized** in that said first cutout portion (7) has a tapered section (7a) for abutting said first sloping surface (6a).

3. The joint mechanism of claim 1, **characterized** in that said central raised portion (9) has a pair or side walls (9a) each erected at right angles to an outside of said joint.

4. The joint mechanism of claim 1, **characterized** in that an outside of said conical disc spring is provided with a color which is different from those of said nut and said central raised portion.

**Patentansprüche**

1. Verbindungsmechanismus zum Verbinden von zwei dünnwandigen Röhren (1) aus nichtrostendem Stahl, die an einem Ende einen ringförmigen Rücken (6) mit ersten und zweiten geneigten Oberflächen (6a,6b) aufweisen, mit

   einem Verbindungsglied (2), dessen Durchmesser so groß ist, daß die Röhren (1) an entgegengesetzten Enden aufgenommen werden können, zwei ersten Ausschnitten (7) an jedem Ende mit einer Dichtungsnut (7b) darin, einem zentralen, angehobenen Bereich (9) und zwei Außengewindeabschnitten (8) auf beiden Seiten des mittleren angehobenen Bereichs,

   zwei Muttern (3) mit Innengewindeabschnitt (11) zum Aufschrauben auf den Außengewindeabschnitt (8), die einen Paßbereich (10) zum Aufschieben über das Rohr, eine Anschlagfläche (12), gegen die die vordere Fläche des Verbindungsgliedes anschlägt, wenn der Innengewindeabschnitt auf den Außengewindeabschnitt aufgeschraubt ist, und zwei zweite Ausschnitte (13), die gegen die ersten und zweiten geneigten Flächen (6b) des ringförmigen Rückens anliegen, aufweisen,

   zwei Dichtpackungen (4), die gegen die erste geneigte Fläche (6a) des ringförmigen Rückens, die Anschlagfläche der Mutter für das Verbindungsglied und die Dichtungsnut anliegen, wenn der Innengewindeabschnitt (11) den Außengewindeabschnitt (8) erfaßt und

   zwei konische Tellerfedern (5), die jeweils auf dem Verbindungsglied zwischen der Mutter (3) und dem zentralen angehobenen Bereich (9) angebracht sind, wobei die äußeren Oberflächen der Tellerfedern (5) mit einer Farbe zur Unterscheidung von der Nut und dem zentralen angehobenen Bereich versehen sind.

2. Verbindungsmechanismus nach Anspruch 1, dadurch **gekennzeichnet**, daß der erste ausgeschnittene Bereich (7) einen kegelförmigen Abschnitt (7a) aufweist, der gegen die erste geneigte Fläche (6a) anliegt.

3. Verbindungsmechanismus nach Anspruch 1, dadurch **gekennzeichnet**, daß der zentrale angehobene Bereich (9) zwei Seitenwände (9a) aufweist, die in rechtem Winkel zur Außenseite der Verbindung aufragen.

**4.** Verbindungsmechnismus nach Anspruch 1, dadurch **gekennzeichnet**, daß eine Außenseite der konischen Tellerfeder mit einer Farbe versehen ist, die unterschiedlich ist gegenüber der Farbe der Mutter und des zentralen angehobenen Bereichs.

## Revendications

**1.** Mécanisme de raccordement servant à relier deux conduites en acier inoxydable à parois minces (1) comportant chacune, à une extrémité, une arête circulaire (6) ayant des première et seconde surfaces inclinées (6a, 6b), comprenant:

un élément de raccordement (2) ayant un diamètre suffisamment grand pour recevoir lesdites conduites (1) à des extrémités opposées, une paire de premières parties évidées (7) aux extrémités avec dans chacune d'elles une rainure (7b) pour garniture, une partie centrale surélevée (9) et deux parties à filetage mâle (8) de part et d'autre de ladite partie centrale surélevée;

deux écrous (3) ayant chacun une partie à filetage femelle (11) destinée à venir en prise avec ladite partie à filetage mâle (8), une partie d'adaptation (10) destinée à s'adapter sur ladite conduite, une surface de butée de raccord (12) contre laquelle une face frontale dudit élément de raccordement vient en appui lorsque ladite partie à filetage femelle est en prise avec ladite partie à filetage mâle, et une seconde partie évidée (13) destinée à venir en appui contre ladite seconde surface inclinée (6b) de ladite arête circulaire;

deux garnitures (4) destinées à venir en appui contre ladite première surface inclinée (6a) de ladite arête circulaire, la surface de butée de raccord ménagée sur ledit écrou, et ladite rainure pour garniture lorsque ladite partie à filetage femelle (11) est en prise avec ladite partie à filetage mâle (8); et

deux rondelles-ressorts coniques (5) montées chacune sur ledit élément de raccordement (2) entre ledit écrou (3) et ladite partie centrale surélevée (9), la surface extérieure desdites rondelles-ressorts (5) étant dotée d'une couleur la distinguant de l'écrou et de la partie centrale surélevée.

**2.** Mécanisme de raccordement selon la revendication 1, caractérisé en ce que ladite première partie évidée (7) comporte une section conique (7a) destinée à venir en appui contre ladite première surface inclinée (6a).

**3.** Mécanisme de raccordement selon la revendication 1, caractérisé en ce que ladite partie centrale surélevée (9) comporte deux parois latérales (9a) s'élevant chacune à angle droit depuis une face extérieure dudit raccord.

**4.** Mécanisme de raccordement selon la revendication 1, caractérisé en ce qu'une face extérieure de ladite rondelle-ressort conique est dotée d'une couleur qui est différente de celles dudit écrou et de ladite partie centrale surélevée.

Fig. 1

Fig. 2

Fig. 3

Fig. 4

EP 0 366 789 B1

Fig. 5

Fig. 6

7